# EUROPEAN PATENT APPLICATION

(11) **EP 3 415 253 A1**
(43) Date of publication of application: **19.12.2018**
(21) Application number: 18175354.2
(22) Date of filing: 31.05.2018
(51) Int. Cl.: B22F 3/105, B22F 3/24, B33Y 10/00, B33Y 40/00, C22F 1/10, C22F 1/02

(54) **HEAT TREATMENT AFTER ALM OF GAMMA'-STRENGTHENED NICKEL BASED SUPERALLOY COMPONENT**

(30) Priority: 15.06.2017 GB 201709540
(71) Applicant: Rolls-Royce plc, London SW1E 6AT (GB)
(72) Inventor: Pardhi, Yogiraj, Derby, Derbyshire DE24 8BJ (GB)
(74) Representative: Rolls-Royce plc

(57) **Abstract**

The present disclosure relates to a method for processing a component formed by an ALM method using a y'-strengthened superalloy having a y' solvus temperature. The processing method comprises heating the component to a treatment temperature at or above the y' solvus temperature at a rate equal to or greater than 50 °C/min and then cooling the component at a rate of greater than 60°C/min.

## Description

### Field of the Invention

The present invention relates to a method of processing a component formed by additive layer manufacturing. In particular, the present invention relates to a method of processing a γ'-strengthened nickel based superalloy component (e.g. a gas turbine component) formed by additive layer manufacturing to reduce micro-defects such as crack formation in order to enhance high temperature performance of the component.

### Background of the Invention

In the aerospace industry, components manufactured by additive layer manufacturing (ALM) methods can have significant performance and weight advantages over components manufactured by more traditional methods.

Powder bed ALM methods construct components layer by layer by depositing powder on a base plate and then selectively consolidating the powder using a laser or other heat source. These steps are repeated to produce a three dimensional component.

The resulting component often comprises defects such as cracks, porosity, voids and layering defects. Such defects can be effectively reduced using hot isostatic pressing or other heat treatments.

Hot isostatic pressing (HIP) is a heat treatment in which high (up to 200 MPa) isostatic pressure is applied to a component e.g. a component formed by an additive layer manufacturing (ALM) method, contained within an inert (e.g. argon) atmosphere in a sealed canister at a high temperature.

GB 2506494 discloses a method where a number of post-ALM processing steps are carried out on a low-carbon superalloy nickel component (CM247LC). These processing steps include: loose powder removal; applying a compressive stress to the component using mechanical impact e.g. by peening; hot isostatic processing after reducing the mass of the base plate; solution heat treatment (at 1260°C for 2 hours); and precipitation hardening (at 871°C for 20 hours).

One problem with the known prior art methods is that hot isostatic pressing requires high temperature and high pressure and thus is a costly process. As such, its availability is limited to only a few suppliers. Also the HIP temperature cycle involves slow heating rates which can lead to strain age cracking in the component. In some cases a stress relief cycle is applied before HIP to avoid the strain age cracking problem. Additionally a solution cycle must follow the HIP treatment since the fast cooling or quenching cannot be achieved in the HIP vessel. Overall use of HIP treatment leads to a long and costly processing route.

Accordingly the present disclosure seeks to provide a method of heat treatment that reduces defects in components, e.g. in components manufactured using an ALM method from a powder material e.g. a high gamma prime nickel based super alloy powder.

### Summary of the Invention

In a first aspect, the present invention provides a processing method for processing a component formed by an ALM method using a γ'-strengthened superalloy having a γ' solvus temperature, the processing method comprising:
heating the component to a treatment temperature at or above the γ' solvus temperature at a rate equal to or greater than 50 °C/min; and
cooling the component at a rate of equal to or greater than 60 °C/min.

The inventors have found that rapid heating of the component to a treatment temperature at or above the γ' solvus temperature and subsequent rapid cooling significantly reduces defects such as cracks, pore, voids and layering defects in an component manufactured by an ALM method without the need for a hot isostatic pressing step. Without wishing to be bound by theory, it is believed that the rapid heating overcomes residual stresses derived from the ALM method (and thus avoids strain age cracking in the component) and that the thermal expansion/contraction during the rapid heating/cooling imparts sufficient stress to collapse the internal defects.

Optional features of the invention will now be set out. These are applicable singly or in any combination with any aspect of the invention.

In some embodiments, the component is heated to a treatment temperature that is below the solidus temperature of the superalloy (to avoid incipient melting).

The γ' solvus temperature and solidus temperature is typically measured using Differential Scanning Calorimetry (DSC). To generate DSC data, heating rates of 10 °C/min for measurements may be used.

Where the superalloy is CM247LC which has a γ' solvus temperature of around 1260 °C, the processing method may comprise heating the component to a treatment temperature equal to or greater than 1260 °C.

Where the superalloy is CMSX4 which has a γ' solvus temperature of around 1300 °C, the processing method may comprise heating the component to a treatment temperature equal to or greater than 1300 °C.

Where the superalloy is CMSX486 which has a γ' solvus temperature of around 1310 °C, the processing method may comprise heating the component to a treatment temperature equal to or greater than 1310 °C.

Where the superalloy is IN738LC which has a γ' solvus temperature of around 1170 °C, the processing method may comprise heating the component to a treatment temperature equal to or greater than 1170 °C.

Where the superalloy is Haynes 282 which has a γ' solvus temperature of around 1010 °C, the processing method may comprise heating the component to a treatment temperature equal to or greater than 1010°C.

The rate of heating is equal to or greater than 50 °C/min. For example, the rate of heating may be equal to or greater than 60 °C/min, or equal to or greater than 70 °C/min, or equal to or greater than 80 °C/min, or equal to or greater than 90 °C/min, or equal to or greater than 100 °C/min or equal to or greater than 110 °C/min, or equal or greater than 120 °C/min.

In some embodiments, the component is heated using induction heating.

In some embodiments, the component is inserted in a preheated furnace or a chamber.

The component may be maintained at the treatment temperature (at or above the γ' solvus temperature) for a hold time of between 30 min-4 hours e.g. around 2 hours.

The rate of cooling is equal to or greater than 60 °C/min. The rate of cooling may be between 60 and 150 °C/min.

In some embodiments, the component is cooled from the treatment temperature to 600 °C at a rate equal to or greater than 60 °C (e.g. between 60 and 150 °C).

In some embodiments, the component is cooled by gas fan quenching.

In some embodiments, the component is subsequently cooled from 600 °C to room temperature. The rate of cooling from 600 °C to room temperature may be less than the rate of cooling from the treatment temperature to 600 °C e.g. it may be less than 60 °C/min.

In some embodiments, the heating and/or cooling may be carried out in an inert atmosphere e.g. in an argon or nitrogen atmosphere.

In some embodiments, a small positive pressure (> ambient pressure) (e.g. up to around 10 bar or 1 MPa) of an inert atmosphere e.g. in an argon or nitrogen atmosphere may be maintained during the treatment cycle.

In some embodiments, the heating and/or cooling is carried out at atmospheric/ambient pressure.

In some embodiments, the processing method is carried out on a component which has not been subjected to hot isostatic pressing.

In some embodiments, the heating and cooling steps are repeated a plurality times.

In some embodiments, the processing method further comprises subjecting the component to an aging step for an aging time after cooling. Ageing is done to provide strength to the materials and may include multiple steps to achieve desired result.

The aging temperature may be greater than 600°C dependent on the alloy e.g. 870°C for CM247LC.

The aging time may be between 4 to 24 hours e.g. around 16 hours for CM247LC.

In a second aspect, the present invention provides a method of manufacturing a component comprising:
manufacturing the component using an ALM method comprising:
   depositing a layer of powdered material comprising γ'-strengthened superalloy having a γ' solvus temperature on a base plate and fusing at least a portion of said layer of powdered material using an energy beam to form a first fused layer of the component;
   depositing a second layer of powdered material comprising γ'-strengthened superalloy on the first fused layer and fusing at least a portion of said second layer of powdered material using the energy beam to form a second fused layer onto the first fused layer; and
   depositing further layers of powdered material comprising γ'-strengthened superalloy on the second/subsequent fused layers and fusing at least a portion of each of said further layers of powdered material using the energy beam to form third and subsequent fused layers of the component until the desired three dimensional component is obtained; and
processing the component using any one embodiment of the processing method described above for the first aspect.

The γ'-strengthened superalloy may be a nickel superalloy. The superalloy may have a low carbon content e.g. between 0.03 to 0.08 %. The superalloy may be CM247LC.

The powdered material may have a particle size of between 15 and 60 microns. This has been found to minimise surface roughness of the component which supresses crack initiation during the processing method.

The energy beam (e.g. laser) may be moved in any known scan pattern. For example, the energy/laser beam may be moved in a scan pattern and at a scan speed as disclosed in GB2506494.

The component may be a turbine or compressor component such as a blade or stator for use in a gas turbine aero-engine.

### Brief Description of the Drawings

Embodiments of the invention will now be described by way of example with reference to the accompanying figures in which:
Figure 1 shows a schematic representation of a method of manufacturing a component;
Figure 2 shows a schematic representation of a first embodiment of the processing method;
Figure 3 shows a section of an additively made Haynes 282 material post additive deposition (step 1 Figure 1);
Figure 4 shows a section of the additively made Haynes 282 material post heat treatment (rapid heating/cooling); and
Figure 5 shows a sectional view of a gas turbine engine.

### Detailed Description

A turbine or compressor component such as a blade or stator for use in a gas turbine aero-engine is manufactured using an ALM method in which a layer of powdered CM247LC having a particle size of between 15 and 60 microns is deposited on a base plate and fused into a 2D first fused layer using a scanning laser beam to melt and fuse the powdered CM247LC. Next a second layer of powdered CM247LC is deposited on the first fused layer and fused into a 2D second fused layer using the scanning laser beam, the second fused layer being fused to the first fused layer.

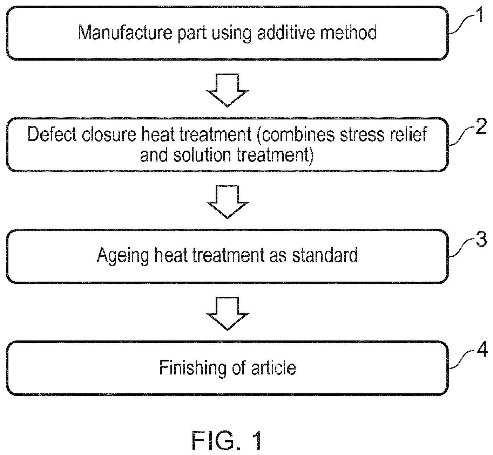

The deposition and fusing of powdered CM247LC is repeated until the desired 3D component is formed from the 2D layers. This is step 1 shown in Figure 1

The component is first processed using a surface finishing step which is applied to reduce the extent of surface asperities which arise as a result of semi-fused powdered CM247LC. The surface finishing step also acts to clean the component of loose powdered CM247LC.

The surface finishing comprises grit blasting using alumina particles. Any portions of the component surface that are not easily accessible e.g. internal bores may be surface finished by abrasive flow machining.

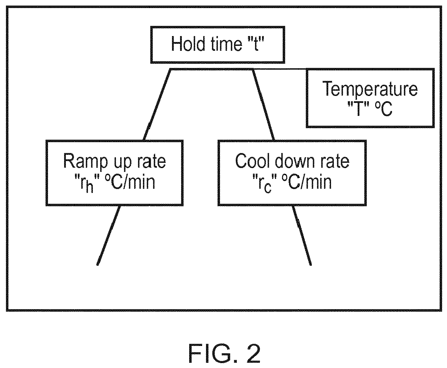

Next, as shown in Figure 2 and step 2 of Figure 1, the surface-finished component is subjected to heating in an argon or nitrogen atmosphere at ambient pressure at a treatment temperature of 1260 °C at a rate greater than 100 °C/min. The component is held at 1260 °C for a hold time of 2 hours followed by rapid cooling to 600 °C at a rate greater than 90 °C/min. The component is subsequently cooled to room temperature at a lower cooling rate.

The heating/cooling of the component is followed by aging at an aging temperature for an aging time shown as step 3 in Figure 1. The aging temperature is 870°C and the aging time is around 16 hours.

Finally, as shown as step 4 in Figure 1, the process comprises finishing by grit blasting, linishing, milling or machining, for example.

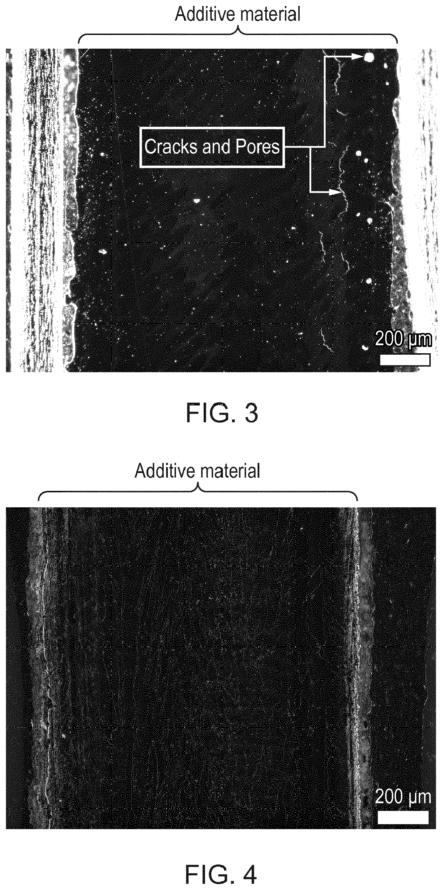

Figure 3 shows a section of an additively made Haynes 282 material post additive deposition (step 1 Figure 1). The image has been taken with optical microscope using dark field illumination to highlight cracks and pores.

Figure 4 shows a section of an additively made Haynes 282 material post heat treatment (rapid heating/cooling) as described herein (step 2 Figure 1). The image has been taken with optical microscope using dark field illumination to highlight cracks and pores. It can be seen that the cracks and pores have been closed by the heat treatment used.

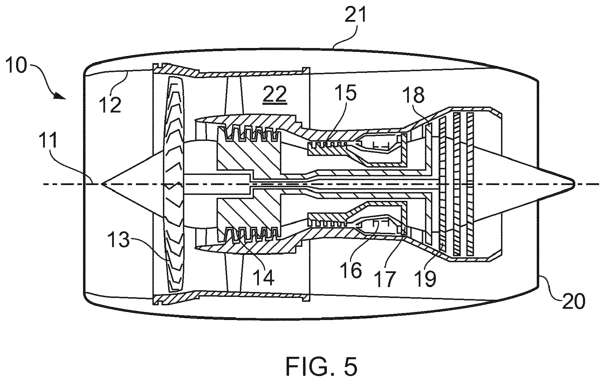

With reference to Figure 5, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16 comprising a plurality of combustor tiles manufactured as described above, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The combustion equipment 16 typically comprises an annular combustion chamber which is lined with the plurality of combustor tiles which can be manufactured according to the method described herein.

The resultant hot combustion products generated within the combustion equipment 16 then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A method for processing a component formed by an ALM method using a γ'-strengthened superalloy having a γ' solvus temperature, the processing method comprising:
heating the component to a treatment temperature at or above the γ' solvus temperature at a rate equal to or greater than 50 °C/min; and
cooling the component at a rate equal to or greater than 60 °C/min.

2. A method according to claim 1 wherein the treatment temperature is below the solidus temperature of the superalloy.

3. A method according to claim 1 or 2 wherein the component is maintained at or above the treatment temperature for a hold time of between 0.5-4 hours.

4. A method according to any one of the preceding claims wherein the component is cooled by gas fan quenching.

5. A method according to any one of the preceding claims wherein the component is cooled at a rate between 60 and 150 °C/min.

6. A method according to any one of the preceding claims wherein the component is cooled from the treatment temperature to around 600 °C at a rate equal to or greater than 60 °C/min.

7. A method according to claim 6 wherein the component is subsequently cooled from around 600 °C to room temperature at a lower cooling rate.

8. A method according to any one of the preceding claims where the component is heated using induction heating.

9. A method according to any one of the preceding claims wherein the component is inserted into a pre-heated chamber/furnace.

10. A method according to any one of the preceding claims wherein the heating and/or cooling is carried out at atmospheric/ambient pressure.

11. A method according to any one of the preceding claims wherein the method is carried out on a component which has not been subjected to hot isostatic pressing.

12. A method according to any one of the preceding claims wherein the method further comprises subjecting the component to an aging step for an aging time after cooling.

13. A method of manufacturing a component comprising:
manufacturing the component using an ALM method comprising:
depositing a layer of powdered material comprising γ'-strengthened superalloy having a γ' solvus temperature on a base plate and fusing at least a portion of said layer of powdered material using an energy beam to form a first fused layer of the component;
depositing a second layer of powdered material comprising γ'-strengthened superalloy on the first fused layer and fusing at least a portion of said second layer of powdered material using the energy beam to form a second fused layer onto the first fused layer; and
depositing further layers of powdered material comprising γ'-strengthened superalloy on the second/subsequent fused layers and fusing at least a portion of each of said further layers of powdered material using the energy beam to form third and subsequent fused layers of the component until the desired three dimensional component is obtained; and
processing the component using the method according to any one of the preceding claims.

14. A method according to claim 13 wherein the γ'-strengthened superalloy is a nickel superalloy.

15. A method according to claim 14 or 15 wherein the powdered material has a particle size of between 15 and 60 microns.
